# EUROPÄISCHE PATENTSCHRIFT

(11) **EP 1 518 061 B1**
(45) Veröffentlichungstag und Bekanntmachung des Hinweises auf die Patenterteilung: **26.10.2005**
(21) Anmeldenummer: 03732282.3
(22) Anmeldetag: 17.04.2003
(51) Int. Cl.: F16F 1/30

(54) **BLATTFEDER MIT MEHREREN SCHICHTEN AUS UNTERSCHIEDLICHEN HOCHPOLYMEREN WERKSTOFFEN**
LEAF SPRING HAVING A PLURALITY OF LAYERS MADE OF DIFFERENT HIGH POLYMER MATERIALS
RESSORT A LAME COMPORTANT PLUSIEURS COUCHES CONSTITUEES DE MATIERES HAUTEMENT POLYMERES DIFFERENTES

(30) Priorität: 27.06.2002 DE 10228902
(43) Veröffentlichungstag der Anmeldung: 30.03.2005
(73) Patentinhaber: Railion Deutschland AG, 55116 Mainz (DE)
(72) Erfinder: BÜGE, Bernd, 14774 Brandenburg (DE); SCHMIEDECK, Peter, 15827 Blankenfelde (DE); FISCHER, Hans-Jürgen, 32427 Minden (DE)
(74) Vertreter: Zinken-Sommer, Rainer
(86) Internationale Anmeldenummer: PCT/EP2003/004048
(87) Internationale Veröffentlichungsnummer: WO 2004/003403

(56) Entgegenhaltungen:
- EP-A- 0 047 074
- DE-A- 19 854 692
- FR-A- 1 258 934
- FR-A- 2 526 110
- FR-A- 2 563 778
- PATENT ABSTRACTS OF JAPAN vol. 010, no. 077 (M-464), 26. März 1986 (1986-03-26) & JP 60 220233 A (NIHON HATSUJIYOU KK), 2. November 1985 (1985-11-02)
- PATENT ABSTRACTS OF JAPAN vol. 009, no. 282 (M-428), 9. November 1985 (1985-11-09) & JP 60 125427 A (NIHON HATSUJIYOU KK), 4. Juli 1985 (1985-07-04)

## Beschreibung

Die Erfindung betrifft eine Blattfeder mit mehreren verschiedenen Lagen aus unterschiedlichen Hochpolymeren für vorzugsweise Eisenbahnfahrzeuge, wobei die Blattfeder an ihren beiden Enden jeweils ein im allgemeinen mit einer Buchse aus Stahl versehenes Federauge aufweist.

Für die Auslegung der Tragfedern von Eisenbahnfahrzeugen sind hauptsächlich Einhaltung der zulässigen Pufferstände, gute Laufeigenschaften und Entgleisungssicherheit maßgebend. Blattfedern für Fahrwerke von Eisenbahnfahrzeugen sind in der Vergangenheit im wesentlichen aus Stahl gefertigt worden. Solche Federn werden insbesondere relativ hoch auf Biegung und Querkraft beansprucht. Hohe Biegefestigkeit und Schubfestigkeit des Materials sind nur durch entsprechend großen Materialaufwand erreichbar, deshalb können die geforderten relativ geringen Federsteifigkeiten und die Dämpfungseigenschaften oft nur schwer und mit großer Baulänge der Federn bzw. geschichteten Federblättern erreicht werden.

Bekannt ist eine Blattfeder mit mehreren geschichteten Federblättern für die Abfederung eines ersten Bauteils gegen ein zweites Bauteil, wobei die Blattfeder über ein erstes Federblatt aus Federstahl mit ihren beiden Enden mit dem ersten Bauteil in Verbindung steht und die übrigen Federblätter aus faserverstärktem Kunststoff ausgebildet sind (DE-OS 30 35 894 A1).
Des Weiteren ist ein Federelement für große Traglasten bekannt, bei dem das Federblatt aus mehreren schubweichen und schubsteifen Schichten besteht, wobei die schubsteifen Schichten aus einem Faserverbundwerkstoff, insbesondere aus einem Kohlefaserlaminat oder Stahl und die schubweiche Schicht aus einem Elastomer bestehen (DE-OS 198 54 692 A1).

Darüber hinaus ist aus DE-OS 3990 374 T1 eine Blattfeder bekannt, deren Endabschnitt einen Kunststoffüberzug aufweist, der mittels eines Reaktionsspritzgussverfahrens aufgetragen wird und eine mechanische Verbindung mit der Konfiguration des Federendabschnitts eingeht.

Allen vorhergehenden Blattfedern ist gemein, dass sie im Bereich der Federmitte den Anschluss an ein Achslager/Achse über den Federbund nicht klar definieren. Bei durchgehenden Dämpfungsschichten aus einem gummiartigen Kunststoff-Material zwischen harten Federblättern ist eine Fixierung der Feder mittels eines Federbunds nur dann möglich, wenn in Federmitte eine Druckbeanspruchung bzw. Verformung der Dämpfungsschicht infolge der vertikalen (Rad-)Lagerkraft verhindert wird. Weiterhin sind die Endbereiche der einzelnen Federblätter/Dämpfungsschichten nicht kerbarm ausgebildet.

Aus dem Dokument JP-A-60 220233 sind die Merkmale des Oberbegriffs von Anspruch 1 bekannt. Der Erfindung liegt die Aufgabe zugrunde, die Nachteile des Standes der Technik durch den Oberbergriff und den kennzeichnenden Teil des ersten Patentanspruches und die weiteren Patentansprüche 2 - 7 zu beheben. Insbesondere soll eine Blattfeder, die überwiegend aus Kunststoffteilen besteht, in leichter, wartungsarmer Bauweise für Eisenbahnfahrzeuge, vorzugsweise Güterwagen, entwickelt werden.

Dies wird erfindungsgemäß durch die Merkmale von Anspruch 1 erreicht. Die federnden Kunststoffschichten werden vorzugsweise aus einem Faserverbundwerkstoff hergestellt. Die mindestens eine Dämpfungsschicht (4), durch deren Maße und Konsistenz die Dämpfungscharakteristik einstellbar ist, wird vorzugsweise aus einem Elastomer gefertigt. Die Dämpfungsschicht weist im Bereich der Enden der federnden Kunststoffschichten und in Längsrichtung als Einziehungen/Hohlkehlen ausgebildete Aussparungen (9; 10) auf. Die Einziehung der Dämpfungsschicht im Bereich der nunmehr überstehenden federnden Kunststoffschichten hat zum Ziel, eine verringerte Kerbwirkung zu erreichen und somit die Beanspruchung der Dämpfungsschicht bzw. deren Verbindung mit der federnden Kunststoffschicht zu reduzieren. Dies hat den Vorteil, dass eine wesentliche Erhöhung der Lebensdauer zu erwarten ist. Die Ausbildung der Einziehungen als Hohlkehlen ist dafür die Voraussetzung.

Bei einem Mehrschichtenaufbau der Blattfeder (1; 2; 3; 4) sind die beiden Endbereiche der untersten federnden Kunststoffschicht (3) oder weiterer federnder Kunststoffschichten (2) jeweils mit einer den Abstand zur nächsten federnden Kunststoffschicht vergrößernden, schnabelartigen Aufweitung versehen. Durch die Ausbildung eines so genannten "weichen Endes" wird erreicht, dass die Kerbwirkung und somit die Beanspruchung der Dämpfungsschicht bzw. deren Verbindung mit der federnden Kunststoffschicht gegenüber der "einfachen" hohlkehlenförmigen Einziehung nochmals verringert wird und letztlich zu einer zusätzlichen Erhöhung der Lebensdauer führt. Die verschiedenen Schichten werden miteinander durch eine geeignete Fügetechnik verbunden.

Weitere Vorteile der Erfindung sind:
- Niedrigeres Gewicht als die konventionellen Ausführungen in Stahl
- Anpassung an ein breites Spektrum von Feder-/Dämpferanforderungen möglich
- Weitgehende Verschleißfreiheit (keine Gleitreibung zwischen den Federblättern)
- Geringer Wartungsaufwand
- Lebenszykluskosten bei entsprechender Stückzahl niedriger als bei konventionellen Ausführungen in Stahl zu erwarten.

### Ausführungsbeispiel

Anhand eines Ausführungsbeispieles soll nachstehend die Erfindung näher erläutert werden. Dabei zeigen:

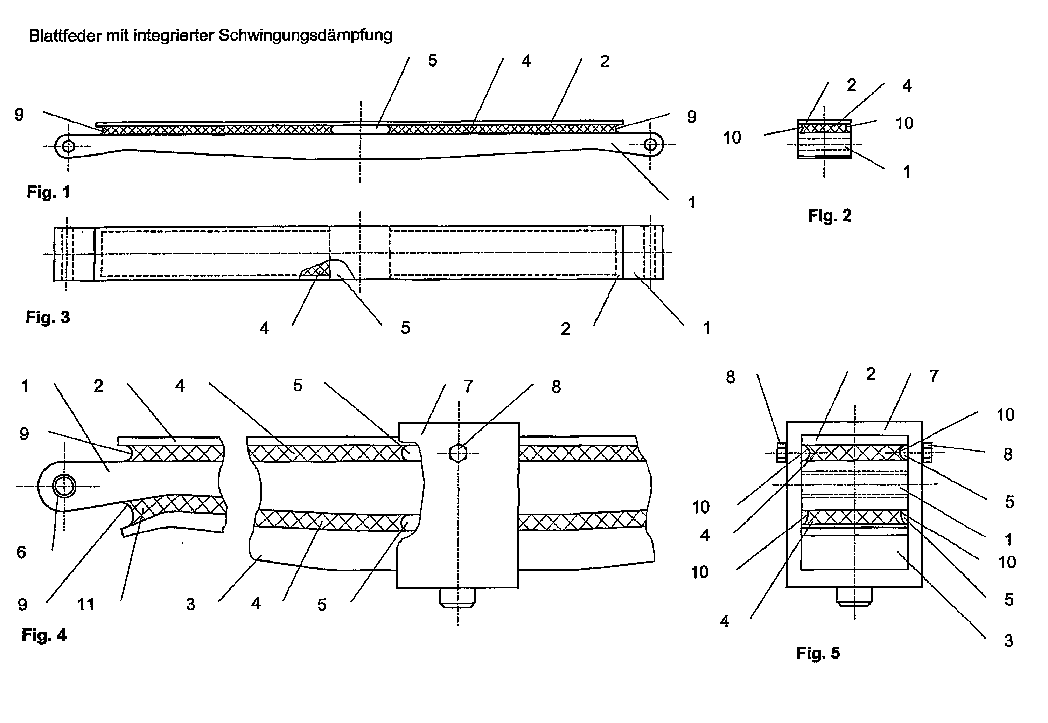

- Figur 1 - die Blattfeder in der Vorderansicht
- Figur 2 - die Blattfeder in der Seitenansicht
- Figur 3 - die Blattfeder in der Draufsicht, inklusive Ausschnitt
- Figur 4 - die Blattfeder mit Buchse und Federbund im Detail als Ausschnitt (Vorderansicht)
- Figur 5 - die Blattfeder mit Federbund im Detail in der Seitenansicht.

Die Blattfeder weist als obere Lage 2 ein Deckband aus einem federnden Kunststoff, vorzugsweise einem Faserverbundwerkstoff auf, das über die Dämpfungsschicht 4 aus einem Elastomer mit der als tragende Blattfeder konzipierten zweiten Schicht aus einem federnden Kunststoff 1, vorzugsweise einem Faserverbundwerkstoff, verbunden ist. Die federnden Kunststoffschichten können als Körper gleicher (Biege-)Beanspruchung ausgebildet werden. Bei allen federnden Kunststoffschichten sind die Kanten in Federblattlängsrichtung gerundet. Da die einzelnen Dämpfungsschichten Druck- und Schubspannungen zu übertragen haben, sind diese Schichten fest mit den federnden Kunststoffschichten verbunden.
Die Blattfeder kann im allgemeinen mit Vorkrümmung bzw. Vorsprengung ausgeführt werden (hier in gestrecktem Zustand dargestellt).
In der Mitte der Feder bzw. der Dämpfungsschicht 4 ist ein Füllstück 5 angeordnet, welches eine Druckbeanspruchung bzw. Quetschung der Dämpfungsschicht infolge der vertikalen (Rad-)Lagerkraft ausschließt und weiterhin zur Festlegung des Federbunds 7 dient. Die Enden des Füllstücks 5 sind quer zur Federblattlängsrichtung gerundet, um die Kerbwirkung zu minimieren. Der Federbund 7 ist auf der Feder wie sonst häufig nicht durch (Nasen-)Keile, sondern durch vorzugsweise mindestens eine Schraubenverbindung 8 festgelegt. Die Verbindung erfolgt über das vorzugsweise aus Stahl bestehende Füllstück 5 durch dessen seitliche Gewindesacklöcher und Schrauben 8, auch durch Zapfenschrauben (dadurch Entfall der Gewinde im Füllstück), einschließlich deren Sicherung (nicht dargestellt) oder mittels Durchgangsschraube; in letzterem Fall besteht das Füllstück vorzugsweise aus Faserverbundwerkstoff. Diese Verbindung Federbund - Füllstück hat den Vorteil, dass Bohrungen in den Federblättern vermieden und eine weitgehend kerbfreie Befestigung des Federbunds erreicht wird. Die Gewindesacklöcher bzw. die Durchgangsbohrung können auch seitlich (am Rand des Füllstücks) angeordnet werden.

In vorteilhafter Ausgestaltung der Erfindung ist unter der zweiten Schicht aus federndem Kunststoff 1 eine weitere Dämpfungsschicht 4 aus einem Elastomer angeordnet. Auch diese Dämpfungsschicht 4 weist in der Mitte eine Aussparung für die Aufnahme eines weiteren Füllstücks 5 auf. Beide Dämpfungsschichten sind jeweils an ihren Seitenflächen (an den Enden und in Längsrichtung) mit vorzugsweise als Hohlkehlen ausgebildeten Einziehungen (Aussparungen) 9; 10 versehen, welche die Kerbwirkung an der Dämpfungsschicht 4 bzw. am Übergang zu den federnden Kunststoffschichten 1; 2; 3 verringern sollen. Als unterste Begrenzung und Abschluss der Mehrschichten-Blattfeder ist eine aus federndem Faserverbundwerkstoff bestehende Schicht 3 angeordnet. Diese Schicht weist an ihren beiden äußeren Begrenzungen eine schnabelartige Aufweitung 11 auf, womit gegenüber der "einfachen" Einziehung 9 eine zusätzliche Reduzierung der Kerbwirkung und der Beanspruchung der Dämpfungsschicht bzw. deren Verbindung mit der federnden Kunststoffschicht erreicht werden soll (analog für weitere federnde Kunststoffschichten, beispielsweise Deckband 2).
Das gesamte Mehrschichten-Paket wird mittig vom Federbund 7 umschlossen.
Zwischen Federbund 7 und der harten Kunststoffschicht 3 kann noch eine (hier nicht dargestellte) über den Federbund 7 herausragende Schicht aus vorzugsweise Stahl zur Verringerung der Flächenpressung eingefügt werden.
Weitere Mehrschichten-Kombinationen sind möglich, z. B. mit Wegfall des Deckbands 2.

### Liste der verwendeten Bezugszeichen

- 1 -: federnde Kunststoffschicht
- 2 -: federnde Kunststoffschicht (Deckband)
- 3 -: federnde Kunststoffschicht
- 4 -: Dämpfungsschicht
- 5 -: Füllstück
- 6 -: Buchse (Federauge)
- 7 -: Federbund
- 8 -: Schraubenverbindung
- 9 -: Aussparung
- 10 -: Aussparung
- 11 -: schnabelartige Aufweitung

## Patentansprüche

1. Blattfeder mit mehreren Schichten aus unterschiedlichen hochpolymeren Werkstoffen, wobei die Blattfeder an ihren beiden Enden jeweils ein Federauge aufweist, das mit einer Buchse (6), vorzugsweise aus Stahl, versehen ist, wobei die Blattfeder aus mehreren an sich bekannten Kunststoffschichten aufgebaut ist, wobei mindestens eine als Dämpfer fungierende Schicht (4) aus eine schubweichen Kunststoff von mindestens zwei Schichten (1; 2) aus einem federnden, schubsteifen Kunststoff eingeschlossen und mit diesen Schichten fest verbunden ist ***gekennzeichnet dadurch, dass*** die mindestens eine weiche Kunststoffschicht (4) im Bereich der Federmitte eine Aussparung aufnehmend mindestens ein nicht komprimierbares Füllstück (5) aufweist, wobei das Füllstück (5) vorzugsweise mit der Schicht (4) verbunden ist und die Kunststoffschichten (1; 2) sowie das Füllstück (5) im Bereich der Federmitte mit einem Federbund (7), vorzugsweise aus Stahl, versehen sind.

2. Blattfeder nach Anspruch 1, ***gekennzeichnet dadurch, dass*** die federnden Kunststoffschichten (1; 2; 3) einen Vollquerschnitt besitzen und vorzugsweise aus einem oder auch unterschiedlichen Faserverbundwerkstoffen hergestellt sind.

3. Blattfeder nach Anspruch 1 und 2, ***gekennzeichnet dadurch, dass*** die mindestens eine Dämpfungsschicht (4) aus einem Elastomer hergestellt ist.

4. Blattfeder nach Anspruch 1 - 3, ***gekennzeichnet dadurch, dass*** die Seitenflächen der mindestens einen Dämpfungsschicht (4) im Bereich der Enden und in der Längsrichtung der federnden Kunststoffschichten (1; 2) als Einziehungen ausgebildete Aussparungen (9; 10) aufweisen.

5. Blattfeder nach Anspruch 4, ***gekennzeichnet dadurch, dass*** die als Einziehungen ausgebildeten Seitenflächen (9; 10) der Dämpfungsschicht (4) als Hohlkehlen ausgeführt sind.

6. Blattfeder nach Anspruch 1 - 5, ***gekennzeichnet dadurch, dass*** bei einem Mehrschichtenaufbau der Blattfeder die beiden Endbereiche der untersten federnden Kunststoffschicht (3) oder weiterer federnder Kunststoffschichten (2) jeweils mit einer den Abstand zur nächsten federnden Kunststoffschicht (1) vergrößernden, schnabelartigen Aufweitung (11) versehen sind.

7. Blattfeder nach Anspruch 1 - 6, ***gekennzeichnet dadurch, dass*** die Verbindung Feder (1; 2; 3; 4) - Federbund (7) durch eine formschlüssige Verbindung von Füllstück (5) und Federbund (7) vorzugsweise durch Schrauben (8) erfolgt.

## Claims

1. A leaf spring with several layers that consist of different high-polymer materials, wherein the two respective ends of the leaf spring contain a spring eye that is provided with a bushing (6), particularly of steel, wherein the leaf spring is composed of several intrinsically known plastic layers, and wherein at least one layer (4) that acts as a damping layer and is manufactured of a flexible plastic material is enclosed by and rigidly connected to at least two layers (1; 2) that are manufactured of a springable, inflexible plastic material, **characterized in that** the at least one soft plastic layer (4) contains a recess accommodating at least one incompressible filler piece (5) in the region of the spring center, wherein the filler piece (5) is preferably connected to the layer (4), and wherein the plastic layers (1; 2) as well as the filler piece (5) are provided with a spring shackle (7), particularly of steel, in the region of the spring center.

2. The leaf spring according to Claim 1, **characterized in that** the springable plastic layers (1; 2; 3) have a solid cross section and are preferably manufactured of one or several different composite fiber materials.

3. The leaf spring according to Claims 1 and 2, **characterized in that** the at least one damping layer (4) is manufactured of an elastomer.

4. The leaf spring according to Claims 1-3, **characterized in that** the lateral surfaces of the at least one damping layer (4) contain recesses (9; 10) in the form of reductions in the region of the ends and in the longitudinal direction of the springable plastic layers (1; 2).

5. The leaf spring according to Claim 4, **characterized in that** the reductions in the lateral surfaces (9; 10) of the damping layer (4) are realized in the form of grooves.

6. The leaf spring according to Claims 1-5, **characterized in that** the two end regions of the bottom springable plastic layer (3) or of additional springable plastic layers (2) of a multi-layer leaf spring is/are respectively provided with a beak-like widening (11) that increases the spacing from the next springable plastic layer (1).

7. The leaf spring according to Claims 1-6, **characterized in that** the connection between the spring (1; 2; 3; 4) and the spring shackle (7) is realized by positively connecting the filler piece (5) and the spring shackle (7), particularly by means of screws (8).

## Revendications

1. Ressort à lames comportant plusieurs couches de matériaux à base de divers hauts polymères, le ressort à lames présentant à ses deux extrémités à chaque fois un oeil de ressort qui est pourvu d'un manchon (6), de préférence en acier, lequel ressort à lames est composé de plusieurs couches de matière plastique connues en soi, au moins une couche (4) faisant office d'amortisseur (4) en matière plastique molle à la poussée étant entourée d'au moins deux couches (1 ; 2) en matière en matière plastique résiliente rigide à la poussée et reliée fixement à ces couches, **caractérisé en ce que** l'au moins une couche de matière plastique molle (4) présente, au niveau du centre du ressort, un évidement recevant au moins une pièce de remplissage non comprimable (5), la pièce de remplissage (5) étant de préférence reliée à la couche (4) et les couches de matière plastique (1 ; 2) ainsi que la pièce de remplissage (5) étant pourvues au niveau du centre du ressort d'une bride de ressort (7), de préférence en acier.

2. Ressort à lames selon la revendication 1, **caractérisé en ce que** les couches résilientes de matière plastique (1 ; 2 ; 3) ont une section transversale pleine et sont fabriquées de préférence dans un ou divers matériaux composites fibreux.

3. Ressort à lames selon la revendication 1 et 2, **caractérisé en ce que** l'au moins une couche d'amortissement (4) est fabriquée en élastomère.

4. Ressort à lames selon les revendications 1 à 3, **caractérisé en ce que** les surfaces latérales de l'au moins une couche d'amortissement (4) présentent des évidements (9 ; 10) pratiqués au niveau des extrémités et dans le sens longitudinal des couches résilientes de matière plastique (1 ; 2) sous forme de retraits.

5. Ressort à lames selon la revendication 4, **caractérisé en ce que** les surfaces latérales (9 ; 10) réalisées sous forme de retraits de la couche d'amortissement (4) sont réalisées sous forme de gorges creuses.

6. Ressort à lames selon les revendications 1 à 5, **caractérisé en ce qu'**avec une structure multicouche du ressort à lames, les deux zones terminales de la couche résiliente de matière plastique (3) située le plus bas ou d'autres couches résilientes de matière plastique (2) présentent chacune un évasement (11) en forme de bec agrandissant la distance par rapport à la prochaine couche résiliente de matière plastique (1).

7. Ressort à lames selon les revendications 1 à 6, **caractérisé en ce que** la liaison ressort (1 ; 2 ; 3 ; 4) - bride de ressort (7) se fait par une liaison à correspondance géométrique de la pièce de remplissage (5) et de la bride de ressort (7) de préférence à l'aide de vis (8).
